# EUROPÄISCHE PATENTSCHRIFT

(11) **EP 2 260 079 B1**
(45) Veröffentlichungstag und Bekanntmachung des Hinweises auf die Patenterteilung: **18.01.2017**
(21) Anmeldenummer: 09727325.4
(22) Anmeldetag: 17.02.2009
(51) Int. Cl.: C09D 7/12, C09D 5/22, C09K 11/77

(54) **WEIß NACHLEUCHTENDE BESCHICHTUNG FÜR INNENKABINEN**
WHITE AFTERGLOW COATING FOR CABIN INTERIORS
REVÊTEMENT PHOSPHORESCENT BLANC POUR CABINES

(30) Priorität: 04.04.2008 DE 102008017356; 04.04.2008 US 123012 P
(43) Veröffentlichungstag der Anmeldung: 15.12.2010
(73) Patentinhaber: Airbus Operations GmbH, 21129 Hamburg (DE)
(72) Erfinder: SCHMITZ, GÜNTER, 21266 Jesteburg (DE)
(74) Vertreter: Kopf Westenberger Wachenhausen Patentanwälte PartG mbB
(86) Internationale Anmeldenummer: PCT/EP2009/051833
(87) Internationale Veröffentlichungsnummer: WO 2009/121659

(56) Entgegenhaltungen:
- EP-A- 1 279 716
- WO-A-2006/029100
- WO-A-2007/056820
- US-A- 2 375 177
- US-A1- 2003 160 560

## Beschreibung

Die vorliegende Erfindung betrifft eine nachleuchtende Beschichtung. Die vorliegende Erfindung bezieht sich weiterhin auf Verfahren zur Herstellung dieser Beschichtungen und deren Verwendung zur Beschichtung von Oberflächen in der Innenkabine von Flugzeugen.

Die Verwendung nachleuchtender Substanzen ist heutzutage z.B. im Sicherheitsbereich weit verbreitet. Nachleuchtende Substanzen bestehen aus photolumineszierenden bzw. phosphoreszierenden Stoffen und können durch natürliches oder künstliches Licht angeregt werden, einen Teil des Lichtes absorbieren und diese Energie speichern. Nach Beendigung der Anregung können diese Substanzen dann über einen gewissen Zeitraum hinweg selbst Licht abgeben, wobei das visuell feststellbare Nachleuchten, abhängig vom photolumineszierenden Stoff, mehrerer Minuten bis mehrere Stunden nach Entfernen der Anregungsquelle anhalten kann. Diese Substanzen können unbeschränkt aktiviert werden, wodurch sich der Effekt beliebig oft wiederholen lässt. Diese photolumineszierenden Stoffe können somit auch bei Dunkelheit, also z.B. im Falle eines Stromausfalles eine Lichtquelle gewährleisten und z.B. Fluchtwege und Notausgänge markieren.

Die WO 2007/118641 beschreibt streifen- oder leistenförmige Bodenmarkierungen für Verkehrsmittel mit einer photolumineszenten Schicht. Die DE 10114432 A1 beschreibt Fluchtwegmarkierungen in Verkehrstunnel, bei denen ein Farbsystem, das mindestens ein nachleuchtendes Pigment enthält, auf eine Trägerfläche aufgebracht ist.

Die EP 1 279 716 A1 offenbart ein weiß leuchtendes Farbemittel enthaltend eine weiße Stammlösung und phosphoreszierende Pigmente, die aus einer anorganischen Mischung umfassend Al₂O₃, SrO, CaO, Eu₂O₃ und B₂O₃ bestehen. Die US 2003/160560 A1 beschreibt eine Leuchtstoffmischung enthaltende skotopische Lampe, wobei die Mischung ein nachleuchtendes Strontiumaluminat wie zum Beispiel Sr₄Al₁₄O₂₅:Eu;Dy enthält. Eine Aufgabe der vorliegenden Erfindung ist daher, eine weiß nachleuchtende

Beschichtung bereit zu stellen, die eine ausreichende Leuchtkraft nach dem Entfernen einer Anregungsquelle, z.B. nach einem Ausfall der Beleuchtung oder dem bewussten Ausschalten der Beleuchtung aufweist.

Zusätzlich besteht eine weitere Aufgabe der vorliegenden Erfindung darin, eine nachleuchtende Beschichtung bereit zu stellen, deren Nachleuchtfarbe vom menschlichen Auge als weiß wahrgenommen wird. Eine weitere Aufgabe besteht darin, dass auch Menschen mit einer Sehschwäche im Falle eines Lichtausfalls das Nachleuchten und somit eine Beleuchtung wahrnehmen können. Eine weitere Aufgabe besteht darin, dass diese nachleuchtende Beschichtung leicht aufzutragen und zu bearbeiten ist und zusätzlich die sicherheitsrelevanten Anforderungen der Flugzeugindustrie erfüllt.

Diese und weitere Aufgaben wurden nach der vorliegenden Erfindung dadurch gelöst, dass ein photolumineszierendes Pigment in einem Klarlack verteilt wird, wobei das Pigment eine weiße Leuchtfarbe aufweist und eine Mischung aus mindestens zwei Erdalkalialuminaten der Zusammensetzung MeAl₂O₄:Eu umfasst, wobei Me ein Erdalkalimetall ausgewählt aus der Gruppe bestehend aus Calcium, Magnesium, Strontium oder Barium ist. Hierbei kann der Klarlack weitere übliche Additive wie z.B. Füllstoffe, Weichmacher, Verlaufhilfsmittel, Haftverbesserer, Härtungsbeschleuniger, Antioxidantien oder Lichtschutzmittel umfassen. Diese Beschichtung kann in gewünschter Stärke und Konzentration auf Oberflächen in den Innenkabinen von Flugzeugen aufgetragen werden.

Im Unterschied zum Stand der Technik umfasst die erfindungsgemäße nachleuchtende Beschichtung einen geeigneten Klarlack, vorzugsweise auf der Basis von Polyurethanen, und ein darin verteiltes photolumineszierendes Pigment, wobei das Pigment eine weiße Leuchtfarbe aufweist. Vorzugsweise ist das photolumineszierende Pigment ein phosphoreszierendes Pigment.

Durch die Verwendung von photolumineszierenden Pigmenten mit weißer Leuchtfarbe weist die erfindungsgemäße nachleuchtende Beschichtung hervorragende photolumineszierende Eigenschaften auf, insbesondere auch ohne zusätzliche Fremdbeleuchtung.

Diese photolumineszierenden Eigenschaften spiegeln sich in einer langen Nachleuchtdauer wieder, wobei die Intensität des von der Beschichtung bewirkten Nachleuchtens auch über einen langen Zeitraum aufrecht erhalten bleibt. Die photolumineszierenden Pigmente innerhalb der nachleuchtenden Beschichtung können außerdem unbeschränkt aktiviert werden und der Effekt des Nachleuchtens lässt sich beliebig oft wiederholen, so dass eine zusätzliche Fremdbeleuchtung, die aufwändig und störungsanfällig ist, im Falle eines Lichtausfalls oder beim bewussten Ausschalten der Beleuchtung nicht notwendig ist, da die nachleuchtende Beschichtung auch bei Dunkelheit als eine Lichtquelle fungieren kann.

Zusätzlich trägt der weiße Farbton der Beschichtung im Tageslicht oder eingeschalteter Beleuchtung im Gegensatz zu einem grünen, roten oder blauen Farbton dazu bei, dass das Wohlbefinden von Passagieren und/oder Personal nicht gestört wird. Im Falle eines Lichtausfalls oder bewussten Abschalten der Beleuchtung trägt die weiße Nachleuchtfarbe der Beschichtung zusätzlich dazu bei, dass die Umgebung nahezu klar und natürlich erscheint und eine zusätzliche Belastung, die dem Wohlbefinden der Passagiere und/oder Personal schadet, ausbleibt. Dementsprechend trägt die erfindungsgemäße nachleuchtende Beschichtung im Falle eines Lichtausfalls oder des bewussten Abschaltens der Beleuchtung auch zur Sicherheit der Passagiere und/oder des Personals bei, da diese weniger durch unnatürliche Farben irritiert werden.

Die weiße Farbe der Beschichtung gewährleistet zusätzlich, dass auch Menschen mit einer Sehschwäche, wie z.B. Farbenblindheit oder Farbenfehlsichtigkeit wie der Rot-Grün-Sehschwäche, im Falle eines Lichtausfalls oder des bewussten Ausschaltens der Beleuchtung, das Nachleuchten der erfindungsgemäßen Beschichtung wahrnehmen können. Diese nachleuchtende Beschichtung ist außerdem beständig gegen hohe und niedrige Temperaturen, nicht entflammbar, verschleiß- und abriebsfest und leicht zu reinigen.

In einer Ausführungsform der vorliegenden Erfindung wird die nachleuchtende Beschichtung vorzugsweise auf der gesamten Oberfläche der Innenkabine eines Flugzeuges aufgetragen. In einer weiteren Ausführungsform besteht die Möglichkeit die nachleuchtende Beschichtung nur auf einzelne Teile der Oberfläche einer Innenkabine eines Flugzeuges aufzutragen, um z.B. Fluchtwege zu markieren.

Als Klarlack der erfindungsgemäßen nachleuchtenden Beschichtung können solche Lacke verwendet werden, die üblicherweise für Beschichtungen verwendet werden. Dazu gehören Einkomponenten(1K)-, Zweikomponenten(2K)- oder Mehrkomponenten(3K, 4K)-Klarlacke, Pulverklarlacke, Pulver-Slurry-Klarlacke oder UV-härtbare Klarlacke.

Einkomponenten(1K)-, Zweikomponenten(2K)- oder Mehrkomponenten(3K, 4K)-Klarlacke sind beispielsweise aus den Patentschriften DE 4204518, DE 19858175, DE 10249916, DE 19717963, DE 10048670, DE 19611646, DE 10055549, DE 4326670, WO 92/22615, WO94/10211 WO 94/10212, WO 94/10213, EP 0594071, EP 0594142, EP 0594069, EP 0604992, US 5,474,811, US 5,605,965, US 5,356,669 bekannt. Dabei können Einkomponenten(1K)-Klarlacke beispielsweise hydroxylgruppenhaltige Bindemittel und Vernetzungsmittel wie blockierte Polyisocyanate, Tris(alkoxycarbonylamino)triazine und/oder Aminoplastharze enthalten, während Zweikomponenten(2K)- oder Mehrkomponenten(3K, 4K)-Klarlacke als wesentliche Bestandteile hydroxylgruppenhaltige Bindemittel und Polyisocyanate als Vernetzungsmittel enthalten können, die bis zu ihrer Verwendung getrennt gelagert werden.

Pulverklarlacke werden beispielsweise in den Patentschriften DE 19901118, DE 9301866, DE 4222194, EP1017750, EP 0666779 beschrieben und können z.B. als wesentliche Bestandteile epoxidgruppenhaltige Bindemittel und Polycarbonsäuren als Vernetzungsmittel enthalten. Pulverslurry-Klarlacke können dagegen Pulverklarlacke enthalten, die in einem wässrigen Medium dispergiert und z.B. aus den Patentschriften DE 10053931, DE 19843581, DE 19953203, DE 19744561, DE 19841408, DE 10027290, EP 1119592, WO 2001/092426 bekannt sind. UV-härtbare Klarlacke sind beispielsweise aus den Patentschriften EP 0540884, EP0568967, US 4,675,234 bekannt.

Als Klarlacke der vorliegenden Erfindung können solche Lacke verwendet werden, die im Wesentlichen bei einer Belastung durch Druck oder hohe oder niedrige Temperaturen, wie sie in der Flugzeugindustrie auftreten, nicht schmelzen, sich verformen, oder auflösen und zusätzlich nicht entflammbar sind. In bestimmten Ausführungsformen sind Klarlacke aus organischen Polymeren verwendbar, die quervernetzte Strukturen aufweisen. Dazu gehören Acrylpolymere, modifizierte Acrylpolymere, Polyester, Polyepoxide, Polycarbonate, Polyurethane, Polyamide, Polyimide, Polysiloxane oder Mischungen daraus. Des weiteren kann jeder Klarlack, der eine ausreichende einheitliche Mischung mit dem erfindungsgemäßen photolumineszierenden Pigment bildet, für die erfindungsgemäße nachleuchtende Beschichtung verwendet werden. Des weiteren kann der Klarlack sowohl einen glänzenden als auch seidenglänzenden oder matten Glanz aufweisen.

Vorzugsweise umfasst der Klarlack der erfindungsgemäßen nachleuchtenden Beschichtung Polyurethane, die durch Polyadditionsreaktionen von Polyisocyanaten mit Polyolen gebildet werden. Der zur Herstellung der nachleuchtenden Beschichtung der vorliegenden Erfindung verwendete Klarlack weist vorzugsweise ein mittleres Molekulargewicht von < 18.000 g/Mol auf, wobei Klarlacke mit einem mittleren Molekulargewicht von 1.000 bis 15.000 g/Mol bevorzugt sind. Noch mehr bevorzugt sind Klarlacke mit einem mittleren Molekulargewicht von 2.000 bis 10.000 g/Mol und am meisten bevorzugt sind Klarlacke mit einem mittleren Molekulargewicht von 3.000 bis 8.000 g/Mol. Die Klarlacke können weitere Zusätze enthalten, wie z.B. Füllstoffe, Weichmacher, Verlaufhilfsmittel, Haftverbesserer, Härter, Verdünner, Antioxidantien oder Lichtschutzmittel.

Die Zusätze der erfindungsgemäßen nachleuchtenden Beschichtung können in bestimmten Ausführungsformen in einer Menge von 0 bis 50 Gew.-%, vorzugsweise in einer Menge von 10 bis 40 Gew.-% vorliegen, jeweils bezogen auf das Gesamtgewicht der nicht ausgehärteten Beschichtungszusammensetzung.

Der Klarlack kann in der erfindungsgemäßen nachleuchtenden Beschichtung in einer Menge von 50 bis 80 Gew.-%, vorzugsweise in einer Menge von 55 bis 75 Gew.-% und am meisten bevorzugt in einer Menge von 65 bis 75 Gew.-%, jeweils bezogen auf das Gesamtgewicht der nicht ausgehärteten Beschichtungszusammensetzung vorliegen.

Eine besonders bevorzugte Ausführungsform der vorliegenden Erfindung umfasst ALEXIT® FST-Klarlack 404-15 der Firma Mankiewicz Gebr. & Co (GmbH & Co. KG) (Deutschland) als Klarlack. Dieser auf der Basis von Polyurethan bestehende farblose Zweikomponenten(2K)-Klarlack ist ein für die Flugzeugindustrie zugelassener Klarlack und verfügt nach erfolgter Aushärtung über hervorragende chemische und physikalische Eigenschaften wie hohe Abriebs- und Verschleißbeständigkeit und weist weiterhin eine hohe Beständigkeit gegen Verschmutzungen und Reinigungsmittel auf.

Die zur Herstellung der erfindungsgemäßen Beschichtung bevorzugte Gruppe von photolumineszierenden Pigmenten sind solche, die bei ihrer Anregung mit sichtbarer oder ultravioletter Strahlung einen Photolumineszenz- bzw. Phosphoreszenzeffekt ergeben. Darunter werden solche photolumineszierenden Pigmente verstanden, bei denen an dem Photolumineszenzprozeß auch energiespeichernde Vorgänge beteiligt sind, so dass die Lumineszenz wenigstens teilweise noch nach Beendigung der Anregung vorhanden ist. Die Anregung des Photolumineszenzeffektes ist mit natürlichem aber auch mit künstlichem Licht möglich, so dass bereits eine künstliche Beleuchtung wie z.B. aus Leuchtstoffröhren oder anderen Beleuchtungsmitteln zur Anregung bzw. Emittierung von Photolumineszenz bzw. Phosphoreszenz ausweicht.

Die photolumineszierenden Pigmente der vorliegenden Erfindung umfassen eine Mischung aus mindestens zwei Erdalkalialuminaten der Zusammensetzung MeAl₂O₄:Eu, wobei Me ein Erdalkalimetall ausgewählt aus der Gruppe bestehend aus Calcium, Magnesium, Strontium oder Barium ist. Das photolumineszierende Pigment liegt vorzugsweise pulverförmig vor.

Die nachleuchtende Beschichtung der vorliegenden Erfindung umfasst eine Mischung aus mindestens zwei Erdalkalialuminaten der Zusammensetzung MeAl₂O₄:Eu, wobei Me jeweils dargestellt wird durch ein Erdalkalimetall ausgewählt aus der Gruppe bestehend aus Calcium, Magnesium, Strontium oder Barium.

Die Gewichtsverhältnisse in den Mischungen, die mindestens zwei Erdalkalialuminate der Zusammensetzung MeAl₂O₄:Eu als photolumineszierende Pigmente umfassen, können in einem weiten Bereich variieren, sollten aber in einem Verhältnis liegen in dem das gewünschte weiße Nachleuchten erzielt wird.

Eine besonders bevorzugte Ausführungsform der vorliegenden Erfindung umfasst das Pigment LL PBL 35-W der Firma Longlite Technologies AG (Deutschland) als photolumineszierendes Pigment.

Bevorzugt weisen die erfindungsgemäß verwendeten photolumineszierenden Pigmente eine durchschnittliche Partikelgröße von 1 bis 60 µm, vorzugsweise 5 bis 55 µm, noch bevorzugter von 10 bis 50 µm, noch mehr bevorzugt 15 bis 45 µm und am meisten bevorzugt von 20 bis 40 µm auf.

Mit der Partikelgröße ist die Primärpartikelgröße gemeint, wobei sich diese Angaben bei runden oder annähernd runden Partikeln auf den Durchmesser beziehen, bei unregelmäßig geformten, wie bspw. nadelförmigen Partikeln auf die längste Achse. Die Partikelgröße wird vom Fachmann je nach den gewünschten Eigenschaften der Beschichtung gewählt. Sie richtet sich beispielsweise auch nach der gewünschten Schichtdicke. Im Regelfalle wird der Fachmann bei einer geringen Schichtdicke kleinere Partikel wählen.

Der Gehalt an dem erfindungsgemäß verwendeten photolumineszierenden Pigment kann in einem weiten Bereich variieren, sollte aber in einem Bereich liegen in dem das gewünschte Nachleuchten erzielt wird. In einigen Ausführungsformen sollte der Mengenanteil des photolumineszierenden Pigmentes höchstens 50 Gew.-% betragen, noch bevorzugter höchstens 45 Gew.-%, jeweils bezogen auf das Gesamtgewicht der nicht ausgehärteten Beschichtungszusammensetzung.

Das photolumineszierende Pigment sollte außerdem in Mengen hinzugegeben werden, so dass eine ausreichende Helligkeit des Nachleuchtens erhalten wird. Bevorzugterweise liegt daher der Mengenanteil des photolumineszierenden Pigmentes in einem Mengenbereich von mindestens 20 Gew.-%, vorzugsweise in einem Mengenbereich von mindestens 25 Gew.-%, jeweils bezogen auf das Gesamtgewicht der nicht ausgehärteten Beschichtungszusammensetzung. Bestimmte Ausführungsformen umfassen daher 20 bis 50 Gew.-%, noch bevorzugter 25 bis 45 Gew.-% und am meisten bevorzugt 25 bis 35 Gew.-% des photolumineszierenden Pigmentes, jeweils bezogen auf das Gesamtgewicht der nicht ausgehärteten Beschichtungszusammensetzung.

In besonderen Ausführungsformen der vorliegenden Erfindung umfasst die nachleuchtende Beschichtung das photolumineszierende Pigment in einem Gewichtsverhältnis von 20:80 bis 50:50 zum Klarlack, noch bevorzugter in einem Gewichtsverhältnis von 25:75 bis 45:55 zum Klarlack und am meisten bevorzugt in einem Gewichtsverhältnis von 25:75 bis 35:65 zum Klarlack.

Die nachleuchtende Beschichtung der vorliegenden Erfindung wurde so eingestellt, dass die photolumineszierenden Pigmente Lichtenergie in einem Wellenlängenbereich von 150 bis 500 nm absorbieren und Licht in einem Wellenlängenbereich von 450 bis 550 nm (Peak value) emittieren. Insbesondere, absorbieren die photolumineszierenden Pigmente Lichtenergie in einem Wellenlängenbereich von 200 bis 450 nm und emittieren Licht in einem Wellenlängenbereich von 480 bis 500 nm (Peak value) und noch bevorzugter bei einer Wellenlänge von 490 nm (Peak value).

Die Nachleuchtfarbe der erfindungsgemäßen Beschichtung erscheint für das menschliche Auge als weiß.

Die nachleuchtende Beschichtung der vorliegenden Erfindung weist eine Nachleuchtdauer von mindestens 6 Stunden auf, vorzugsweise von mindestens 8 Stunden, noch bevorzugter von mindestens 10 Stunden und am meisten bevorzugt von mindestens 12 Stunden. Dabei beträgt die Nachleuchtdichte 60 Minuten nach der Aktivierung mit einer Umgebungsbeleuchtung von 25 lx (Lux) und einer Aktivierungszeit von 1 Stunde mindestens 3 mcd/m², vorzugsweise mindestens 5 mcd/m², noch bevorzugter mindestens 7 mcd/m² und am meisten bevorzugt mindestens 9 mcd/m² (mcd = millicandela).

Allgemein kann bei der Herstellung der erfindungsgemäßen Beschichtung ein Klarlack mit dem photolumineszierenden Pigment und gegebenenfalls weiteren Zusätzen, wie z.B. allgemein bekannte Füllstoffe, Weichmacher, Verlaufhilfsmittel, Haftverbesserer, Härter, Verdünner, Antioxidantien oder Lichtschutzmittel, vermischt werden, so dass eine gleichmäßige Verteilung des photolumineszierenden Pigmentes in dem Klarlack erfolgt. Diese Mischung kann dann gegebenenfalls auf eine Oberfläche aufgetragen und zur Beschichtung ausgehärtet werden.

Die erfindungsgemäße nachleuchtende Beschichtung kann beispielsweise auf Metall, Keramik, Kunststoff, Glas oder Holz aufgebracht werden, deren Oberfläche bereits mit diesem Klarlack oder einer anderen Beschichtungszusammensetzung vorlackiert sein kann. Die erfindungsgemäße nachleuchtende Beschichtung erweist sich insbesondere auf vorlackierten Stahl- oder Kunststoffen als geeignet. Die erfindungsgemäße Beschichtung eignet sich bevorzugt zur Verwendung auf Substraten in den Innenkabinen von Flugzeugen, kann aber auch für andere Zwecke verwendet werden, wie z.B. für andere Verkehrsmittel wie Autos, Theater, Kinos, Kellerräume etc..

Die nachleuchtende Beschichtung der vorliegenden Erfindung kann dabei geschlossen auf eine große Fläche wie z.B. Wände, Böden und/oder Decken aufgetragen werden. Es können jedoch auch einzelne Bereiche, z.B. zur Markierung von Fluchtwegen oder anderer visuellen Effekte mit der nachleuchtenden Beschichtung überzogen werden.

In bestimmten Ausführungsformen wird die nachleuchtende Beschichtung der vorliegenden Erfindung direkt auf eine unbehandelte Oberfläche aufgetragen. In anderen Ausführungsformen wird die nachleuchtende Beschichtung auf eine vorbehandelte Oberfläche, wie z.B. grundierte oder vorlackierte, aufgetragen, um die Haftung der nachleuchtenden Beschichtung zu verbessern.

Die nachleuchtende Beschichtung der vorliegenden Erfindung kann in jeder Form aufgetragen werden, die sicher stellt, dass die Beschichtung die Oberfläche des Trägermaterials in der gewünschten Weise beschichtet, z.B. kann die Beschichtung konventionell durch Sprühen oder Spritzen oder durch eine Bürste auf die Oberfläche aufgebracht werden. In einer weiteren Ausführungsform wird die nachleuchtende Beschichtung der vorliegenden Erfindung mit Hilfe einer Spachteltechnik zusammen mit anderen Farbpartikeln zur Herstellung einer optischen Oberfläche, ähnlich wie eine marmorierte Oberfläche, auf eine Oberfläche aufgebracht. Dazu sollte der Mengenanteil an photolumineszierenden Pigmenten vorzugsweise in einem Bereich von 30 bis 50 Gew.-% liegen, bezogen auf das Gesamtgewicht der nicht ausgehärteten Beschichtungszusammensetzung.

Das Aushärten bzw. Trocknen der nachleuchtenden Beschichtung auf der zu beschichtenden Oberfläche kann in üblicher Weise bei Raumtemperatur oder erhöhten Temperaturen für eine ausreichende Zeitdauer erfolgen. Bei Raumtemperatur erfolgt eine vollständige Durchhärtung der Beschichtung dabei üblicherweise innerhalb einer Zeitdauer von 6 bis 8 Tagen (z.B. 20 °C und 60 % relative Luftfeuchtigkeit). In einer anderen Ausführungsform erfolgt das Aushärten der nachleuchtenden Beschichtung bei einer Temperatur von 60 °C innerhalb einer Zeitdauer von 1 bis 4 Stunden.

Die Trockenschichtdicke der nachleuchtenden Beschichtung kann bei z.B. 30 Gew.-% Pigment schließlich eine Stärke von 15 bis 200 µm, noch bevorzugter 20 bis 140 µm und am meisten bevorzugt eine Stärke von 40 bis 80 µm aufweisen.

Im folgenden sind Beispiele vorteilhafter Ausführungsformen der erfindungsgemäßen Beschichtung aufgeführt, dabei sind % als Gew.-%, bezogen auf das Gesamtgewicht der nicht ausgehärteten Beschichtungszusammensetzung angegeben:

### BEISPIEL 1

Ein Klarlack ALEXIT® FST-Klarlack 404-15 der Firma Mankiewicz Gebr. & Co (GmbH & Co. KG) (Deutschland) wird mit 30 Gew.% eines photolumineszierenden Pigmentes mit weißer Leuchtfarbe (LL PBL 35-W der Firma Longlite Technologies (Deutschland)) vermischt. Anschließend wird die Beschichtung auf eine Oberfläche aufgetragen und ausgehärtet.

### BEISPIEL 2

Die Nachleuchtdichte des in Beispiel 1 verwendeten photolumineszierenden Pigmentes wurde gemäß der DIN-Vorschrift 67510 Teil 1 bestimmt. Dabei wird die Nachleuchtdichte 60 Minuten nach der Aktivierung mit einer Umgebungsbeleuchtung von 25 lx (Lux) und einer Aktivierungszeit von 1 Stunde gemessen. In der nachfolgenden Tabelle I sind die entsprechenden Nachleuchtdichten zu unterschiedlichen Zeiten dargestellt.

**Tabelle I:**

| Zeit | Nachleuchtdichte gemäß Beispiel 2 |
|---|---|
| [min] | [mcd/m²] |
| 0 | 2697 |
| 1 | 475 |
| 5 | 131 |
| 10 | 67 |
| 20 | 32 |
| 30 | 21 |
| 40 | 15 |
| 50 | 12 |
| 60 | 10 |

Die Erfindung ist nicht auf die vorstehend beschriebenen Ausführungsbeispiele beschränkt. Es ist beispielsweise möglich einen anderen Klarlack oder andere photolumineszierende Pigmente zu verwenden.

## Patentansprüche

1. Nachleuchtende Beschichtung, umfassend einen Klarlack und ein photolumineszierendes Pigment, wobei das Pigment eine weiße Leuchtfarbe aufweist und in dem Klarlack verteilt ist, **dadurch gekennzeichnet, dass** das photolumineszierende Pigment eine Mischung aus mindestens zwei Erdalkalialuminaten der Zusammensetzung MeAl₂O₄:Eu umfasst, wobei Me ein Erdalkalimetall ausgewählt aus der Gruppe bestehend aus Calcium, Magnesium, Strontium oder Barium ist.

2. Beschichtung nach Anspruch 1, **dadurch gekennzeichnet, dass** der Klarlack aus der Gruppe umfassend Einkomponenten(1K)-, Zweikomponenten(2K)- oder Mehrkomponenten(3K, 4K)-Klarlacke, Pulverklarlacke, Pulver-Slurry-Klarlacke, UV-härtbare Klarlacke oder flüssige Klarlacke ausgewählt ist.

3. Beschichtung nach einem der Ansprüche 1 oder 2, **dadurch gekennzeichnet, dass** der Klarlack ausgewählt ist aus der Gruppe umfassend Lacke auf der Basis von Acrylpolymeren, modifizierten Acrylpolymeren, Polyestern, Polyepoxiden, Polycarbonaten, Polyurethanen, Polyamiden, Polyimiden, Polysiloxanen oder Mischungen daraus.

4. Beschichtung nach einem der Ansprüche 1 bis 3, **dadurch gekennzeichnet, dass** die photolumineszierenden Pigmente Lichtenergie in einem Wellenlängenbereich von 100 bis 500 nm, noch bevorzugter von 200 bis 450 nm absorbieren.

5. Beschichtung nach einem der Ansprüche 1 bis 4, **dadurch gekennzeichnet, dass** die photolumineszierenden Pigmente Lichtenergie in einem Wellenlängenbereich von 450 bis 550 nm (Peak value), noch bevorzugter in einem Wellenlängenbereich von 480 bis 500 nm (Peak value) und besonders bevorzugt mit einer Wellenlänge von 490 nm (Peak value) emittieren.

6. Beschichtung nach einem der Ansprüche 1 bis 5, **dadurch gekennzeichnet, dass** das photolumineszierende Pigment eine durchschnittliche Partikelgröße von 1 bis 60 nm, vorzugsweise 5 bis 55 nm, noch bevorzugter 10 bis 50 µm, noch mehr bevorzugt 15 bis 45µm und am meisten bevorzugt von 20 bis 40 µm aufweist.

7. Beschichtung nach einem der Ansprüche 1 bis 6, **dadurch gekennzeichnet, dass** das photolumineszierende Pigment in einem Gewichtsverhältnis von 20:80 bis 50:50 zum Klarlack, noch bevorzugter in einem Gewichtsverhältnis von 25:75 bis 45:55 zum Klarlack und am meisten bevorzugt in einem Gewichtsverhältnis von 25:75 bis 35:65 zum Klarlack vorliegt.

8. Beschichtung nach einem der Ansprüche 1 bis 7, **dadurch gekennzeichnet, dass** die Beschichtung eine Trockenschichtdicke von 15 bis 200 µm, vorzugsweise von 20 bis 140 µm und am meisten bevorzugt von 40 bis 80 µm aufweist.

9. Beschichtung nach einem der Ansprüche 1 bis 8, **dadurch gekennzeichnet, dass** diese eine Nachleuchtdauer von mindestens 6 Stunden, vorzugsweise von mindestens 8 Stunden, noch bevorzugter von mindestens 10 Stunden und am meisten bevorzugt von mindestens 12 Stunden aufweist.

10. Beschichtung nach einem der Ansprüche 1 bis 9, **dadurch gekennzeichnet, dass** diese eine Nachleuchtdichte von mindestens 3 mcd/m², vorzugsweise mindestens 5 mcd/m², noch bevorzugter mindestens 7 mcd/m² und am meisten bevorzugt mindestens 9 mcd/m² aufweist.

11. Verfahren zur Herstellung einer nachleuchtenden Beschichtung, **dadurch gekennzeichnet, dass** ein photolumineszierendes Pigment mit weißer Leuchtfarbe mit dem Klarlack vermischt wird, die Beschichtung auf eine Oberfläche aufgetragen wird und ausgehärtet wird, **dadurch gekennzeichnet, dass** das photolumineszierende Pigment eine Mischung aus mindestens zwei Erdalkalialuminaten der Zusammensetzung MeAl₂O₄:Eu umfasst, wobei Me ein Erdalkalimetall ausgewählt aus der Gruppe bestehend aus Calcium, Magnesium, Strontium oder Barium ist.

12. Verwendung einer nachleuchtenden Beschichtung nach einem der Ansprüche 1 bis 10 zur Beschichtung von Metall, Keramik, Kunststoff, Glas und/oder Holz.

13. Verwendung einer nachleuchtenden Beschichtung nach einem der Ansprüche 1 bis 10 zur Beschichtung von Oberflächen in der Innenkabine von Flugzeugen.

14. Kunststoffformteil umfassend eine nachleuchtende Beschichtung nach einem der Ansprüche 1 bis 10.

## Claims

1. An afterglow coating comprising a clear varnish and a photoluminescent pigment, wherein the pigment has a white luminous colour and is distributed in the clear varnish, **characterized in that** the photoluminescent pigment comprises a mixture of at least two alkaline earth aluminates of the composition MeAl₂O₄:Eu, wherein Me is an alkaline earth metal selected from the group consisting of calcium, magnesium, strontium or barium.

2. The coating of claim 1, **characterized in that** the clear varnish is selected from the group comprising single-component (1K), two-component (2K) or multi-component (3K, 4K) clear varnishes, clear powder varnishes, powder-slurry clear varnishes, UV-curable clear varnishes or liquid clear varnishes.

3. The coating of any one of claims 1 or 2, **characterized in that** the clear varnish is selected from the group comprising varnishes based on acrylic polymers, modified acrylic polymers, polyesters, polyepoxides, polycarbonates, polyurethanes, polyamides, polyimides, polysiloxanes or mixtures thereof.

4. The coating of any one of claims 1 to 3, **characterized in that** the photoluminescent pigments absorb light energy in a wavelength range from 100 to 500 nm, more preferably from 200 to 450 nm.

5. The coating of any one of claims 1 to 4, **characterized in that** the photoluminescent pigments emit light energy in a wavelength range from 450 to 550 nm (peak value), more preferably in a wavelength range from 480 to 500 nm (peak value) and particularly preferably at a wavelength of 490 nm (peak value).

6. The coating of any one of claims 1 to 5, **characterized in that** the photoluminescent pigment has an average particle size from 1 to 60 µm, preferably 5 to 55 µm, more preferably 10 to 50 µm, still more preferably 15 to 45 µm and most preferably from 20 to 40 µm.

7. The coating of any one of claims 1 to 6, **characterized in that** the photoluminescent pigment is present at a weight ratio of 20:80 to 50:50 relative to the clear varnish, more preferably at a weight ratio of 25:75 to 45:55 to the clear varnish, and most preferably at a weight ratio of 25:75 to 35:65 to the clear varnish.

8. The coating of any one of claims 1 to 7, **characterized in that** the coating has a dry coating thickness from 15 to 200 µm, preferably from 20 to 140 µm and most preferably from 40 to 80 µm.

9. The coating of any one of claims 1 to 8, **characterized in that** it has an afterglow duration of at least 6 hours, preferably of at least 8 hours, more preferably of at least 10 hours and most preferably of at least 12 hours.

10. The coating of any one of claims 1 to 9, **characterized in that** it has an afterglow density of at least 3 mcd/m², preferably at least 5 mcd/m², more preferably at least 7 mcd/m² and most preferably at least 9 mcd/m².

11. A method for producing an afterglow coating, **characterized in that** a photoluminescent pigment of a white luminous colour is mixed with the clear varnish, the coating is applied to a surface and is cured, **characterized in that** the photoluminescent pigment comprises a mixture of at least two alkaline earth aluminates of the composition MeAl₂O₄:Eu, wherein Me is an alkaline earth metal selected from the group consisting of calcium, magnesium, strontium or barium.

12. The use of an afterglow coating of any one of claims 1 to 10 for coating metal, ceramic, plastic, glass and/or wood.

13. The use of an afterglow coating of any one of claims 1 to 10 for coating surfaces in the cabin of aircraft.

14. A moulded plastic part comprising an afterglow coating of any one of claims 1 to 10.

## Revendications

1. Revêtement phosphorescent comprenant un vernis incolore et un pigment photoluminescent, dans lequel le pigment présente une couleur lumineuse blanche et est réparti dans le vernis incolore, **caractérisé en ce que** le pigment photoluminescent comprend un mélange constitué d'au moins deux aluminates alcalino-terreux de la composition MeAl₂O₄:Eu, dans lequel mélange Me est un métal alcalino-terreux sélectionné dans le groupe constitué de calcium, magnésium, strontium ou baryum.

2. Revêtement selon la revendication 1, **caractérisé en ce que** le vernis incolore est sélectionné dans le groupe comprenant des vernis incolores à un composant, à deux composants ou à plusieurs composants, des vernis incolores en poudre, des vernis incolores à suspension sous forme de poudre, des vernis incolores durcissables par UV ou des vernis incolores liquides.

3. Revêtement selon l'une quelconque des revendications 1 ou 2, **caractérisé en ce que** le vernis incolore est sélectionné dans le groupe comprenant des vernis sur la base de polymères acryliques, de polymères acryliques modifiés, de polyesters, de polyépoxydes, de polycarbonates, de polyuréthannes, de polyamides, de polyimides, de polysiloxanes, ou de mélanges de ceux-ci.

4. Revêtement selon l'une quelconque des revendications 1 à 3, **caractérisé en ce que** les pigments photoluminescents absorbent l'énergie lumineuse dans une plage de longueur d'onde de 100 à 500 nm, de manière encore plus préférée de 200 à 450 nm.

5. Revêtement selon l'une quelconque des revendications 1 à 4, **caractérisé en ce que** les pigments photoluminescents émettent l'énergie lumineuse dans une plage de longueur d'onde de 450 à 550 nm (valeur de crête), de manière encore plus préférée dans une plage de longueur d'onde de 480 à 500 nm (valeur de crête) et de manière particulièrement préférée avec une longueur d'onde de 490 nm (valeur de crête).

6. Revêtement selon l'une quelconque des revendications 1 à 5, **caractérisé en ce que** le pigment photoluminescent présente une taille de particule moyenne de 1 à 60 µm, de préférence de 5 à 55 µm, de manière encore plus préférée de 10 à 50 µm, de manière encore plus préférée de 15 à 45 µm et de manière la plus préférée de 20 à 40 µm.

7. Revêtement selon l'une quelconque des revendications 1 à 6, **caractérisé en ce que** le pigment photoluminescent est présent dans un rapport pondéral de 20 : 80 à 50 : 50 par rapport au vernis incolore, de manière encore plus préférée dans un rapport pondéral de 25 : 75 à 45 : 55 par rapport au vernis incolore et de manière la plus préférée dans un rapport pondéral de 25 : 75 à 35 : 65 par rapport au vernis incolore.

8. Revêtement selon l'une quelconque des revendications 1 à 7, **caractérisé en ce que** le revêtement présente une épaisseur de couche sèche de 15 à 200 µm, de préférence de 20 à 140 µm, et de manière la plus préférée de 40 à 80 µm.

9. Revêtement selon l'une quelconque des revendications 1 à 8, **caractérisé en ce que** celui-ci présente une durée phosphorescente d'au moins 6 heures, de manière encore plus préférée d'au moins 10 heures et de manière la plus préférée d'au moins 12 heures.

10. Revêtement selon l'une quelconque des revendications 1 à 9, **caractérisé en ce que** celui-ci présente une densité phosphorescente d'au moins 3 mcd/m², de préférence d'au moins 5 mcd/m², de manière encore plus préférée d'au moins 7 mcd/m² et de manière la plus préférée d'au moins 9 mcd/m².

11. Procédé de fabrication d'un revêtement phosphorescent, **caractérisé en ce qu'**un pigment photoluminescent de couleur luminescente blanche est mélangé au vernis incolore, **en ce que** le revêtement est appliqué sur une surface et est durci, **caractérisé en ce que** le pigment photoluminescent comprend un mélange constitué d'au moins deux aluminates alcalino-terreux de la composition MeAl₂O₄:Eu, dans lequel mélange Me est un métal alcalino-terreux sélectionné dans le groupe constitué de calcium, magnésium, strontium ou baryum.

12. Utilisation d'un revêtement phosphorescent selon l'une quelconque des revendications 1 à 10 pour le revêtement de métal, céramique, plastique verre et/ou bois.

13. Utilisation d'un revêtement phosphorescent selon l'une quelconque des revendications 1 à 10 pour le revêtement de surfaces dans la cabine intérieure d'avions.

14. Pièce moulée en matière plastique comprenant un revêtement phosphorescent selon l'une quelconque des revendications 1 à 10.
